# EUROPÄISCHE PATENTSCHRIFT

(11) **EP 3 008 534 B1**
(45) Veröffentlichungstag und Bekanntmachung des Hinweises auf die Patenterteilung: **02.10.2019**
(21) Anmeldenummer: 14724111.1
(22) Anmeldetag: 16.05.2014
(51) Int. Cl.: G06K 9/00, G05D 1/02

(54) **VERFAHREN ZUM MODELLIEREN EINES UMFELDS EINES FAHRZEUGS**
METHOD FOR MODELLING THE SURROUNDINGS OF A VEHICLE
PROCÉDÉ PERMETTANT DE MODÉLISER UN ENVIRONNEMENT DE VÉHICULE

(30) Priorität: 14.06.2013 DE 102013211126
(43) Veröffentlichungstag der Anmeldung: 20.04.2016
(73) Patentinhaber: Robert Bosch GmbH, 70442 Stuttgart (DE)
(72) Erfinder: HEIGELE, Christian, 70435 Stuttgart (DE); MIELENZ, Holger, 73760 Ostfildern (DE); LEHNER, Philipp, 75417 Muehlacker (DE)
(86) Internationale Anmeldenummer: PCT/EP2014/060142
(87) Internationale Veröffentlichungsnummer: WO 2014/198489

(56) Entgegenhaltungen:
- WO-A2-2008/005661
- US-A1- 2008 027 591
- US-B1- 8 209 143
- Anderson A. S. Souza ET AL: "3D Probabilistic Occupancy Grid to Robotic Mapping with Stereo Vision" In: "Current Advancements in Stereo Vision", 11. Juli 2012 (2012-07-11), InTech, XP55154699, ISBN: 978-9-53-510660-9 DOI: 10.5772/49050, das ganze Dokument
- ANDREASSON H ET AL: "A Minimalistic Approach to Appearance-Based Visual SLAM", IEEE TRANSACTIONS ON ROBOTICS, IEEE SERVICE CENTER, PISCATAWAY, NJ, US, Bd. 24, Nr. 5, 1. Oktober 2008 (2008-10-01), Seiten 991-1001, XP011332772, ISSN: 1552-3098, DOI: 10.1109/TRO.2008.2004642

## Beschreibung

### Stand der Technik

Die vorliegende Erfindung betrifft ein Verfahren zum Modellieren eines Umfelds eines Fahrzeugs. Weiterhin betrifft die Erfindung ein Steuergerät, das das erfindungsgemäße Verfahren ausführen kann.

Soll ein mobiles System (z.B. Roboter, Fahrzeug) sich automatisch in einer Umgebung zurechtfinden und Handlungen durchführen, so ist es für das System notwendig eine, Karte seiner lokalen Umgebung zu erstellen. Mithilfe von Umfeldsensoren wird die Umgebung erfasst und die Karte nach und nach ergänzt bzw. korrigiert. Eine beliebte Repräsentationsform hierfür sind die sogenannten Occupancy Grids. Dabei wird das Umfeld als ein Rechteck definierten Abmaßes beschrieben und das Rechteck selbst in gleichmäßig gerasterte Elemente aufgeteilt, die sogenannten Zellen. Jede dieser Zellen kann ein Belegtheitsmaß beinhalten. Die Veröffentlichung "Anderson A. S. Souza ET AL: 3D Probabilistic Occupancy Grid to Robotic Mapping with Stereo Vision In: Current Advancements in Stereo Vision, 11. Juli 2012" offenbart ein Verfahren, wie unter Verwendung von Occupancy Grids möglichst akkurate Karten für Navigationszwecke eines Rotors erzeugt werden können.

Um die historischen Messungen korrekt in das Umfeldmodell einzutragen benötigt das mobile System Wissen über seine eigene Position. Dieses kann von einer globalen Positionierung wie GPS oder über eine lokale Referenzierung, wie beispielsweise die Odometrie oder Koppelnavigation, gewonnen werden. Hilfsmittel für eine globale Positionierung haben häufig den Nachteil, dass sie sehr teuer sind und zudem auch häufig nicht die notwendige Genauigkeit erreichen. Lokale Positionierungseinheiten bestimmen die relative Bewegung des Fahrzeuges bzgl. einer (anfänglichen) Referenzposition. Da die Messung der relativen Bewegung in der Regel fehlerbehaftet ist, im Falle der Odometrie z.B. aus nicht zu messendem Radschlupf resultierend, kumulieren sich die Fehler auf und es kommt zu einem Drift in der Position, vor allem aber der Winkelinformation (Orientierung).

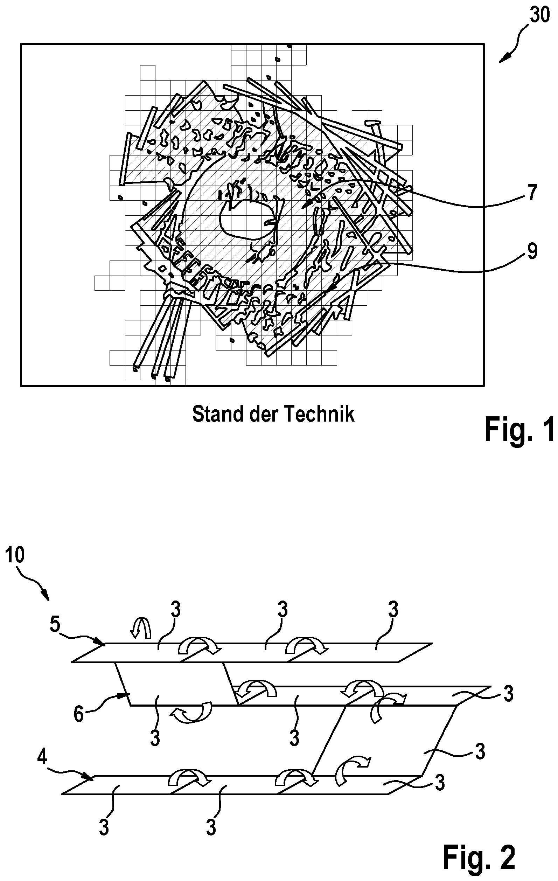

Figur 1 zeigt beispielhaft ein Umfeldmodell 30 mit einem Occupancy Grid mit Umfeldmessdaten eines Fahrzeuges, das mehrfach im Kreis gefahren ist. Darin sind Freiflächen 7 und Hindernisse 9, insbesondere Wände, modelliert. Die langen Wände an den Seiten sind in der realen Welt an derselben Position, im resultierenden Umfeldmodell 30 weisen sie jedoch einen signifikanten Drift auf. Das Umfeldmodell 30 wird daher nach und nach immer weiter verfälscht und wird somit unbrauchbar.

In der Robotik ist dieses Phänomen als Loop-Closing Problem bekannt und es existiert ein Lösungsansatz: Ein geeignetes System speichert sich neben der Erstellung eines Umfeldmodells alle Positionsdaten, alle zugehörigen Messdaten und ggf. geeignete Features. Features sind hierbei besondere Merkmale die im Idealfall eindeutig identifizierbar und zuordnbar sind. Beispielhaft sind Positionsfeatures wie Kanten oder Bildbasierte wie SIFT-Features (Scale-invariant feature transform) zu nennen.

Anhand dieser Features kann festgestellt werden, wenn sich das Fahrzeug wieder an einer altbekannten Position befindet. Weißt die Positionierungseinheit einen zu großen Fehler auf, kann rückwärtsgerechnet werden, wie die Positionen, an denen die zugehörigen Features gemessen wurden, korrigiert werden müssen, um die Messwahrscheinlichkeit der Features zu maximieren. Dieses Problem ist stark verwandt mit SLAM, Simultaneous localisation and mapping.

Wurde die Trajektorie korrigiert, kann sie virtuell erneut abgefahren werden und für jeden Zeitschritt die aufgezeichneten Messungen in ein neues Weltmodell integriert werden, das nun keinen Drift mehr aufweist.

Die klassische Methode hat jedoch einen großen Nachteil: Es müssen für alle Zeitschritte, die für einen Schleifenschluss in Frage kommen, die Messdaten gespeichert werden. Dies führt zu den Problemen, dass erstens eine signifikante Menge an Speicherplatz reserviert werden muss und zweitens ist es vorab unsicher wie groß die Datenmenge wird, das bedeutet, dass man einen wachsenden Datenspeicher braucht, bei dem nicht eindeutig zu entscheiden ist, wann man ihn zurücksetzen kann.

GridTiles sind eine Methodik zur Modellierung eines Umfeldes von einem Roboter mit unbekannter Ausdehnung. Die Grundidee ist, dass die Modellierung durch ein Set von kleinen quadratischen Kacheln geschieht, die jeweils um den Roboter herum ausgelegt werden. Jede dieser Kacheln besitzt insbesondere ein Occupancy Grid und Nachbarschaftsbeziehungen zu den vier benachbarten Kacheln. Befindet sich der Roboter bzw. erfasst dieser Objekte außerhalb eines bisher durch solche Kacheln beschriebenen Bereiches, werden dort ebenfalls Kacheln ausgelegt und die Messungen in die Grids der jeweils betroffenen Kacheln integriert.

Ein mobiles System mit einer derart beschriebenen Umfelderfassung, Umfeldmodell und Loop-Closing Fähigkeit kann ein Fahrzeug, insbesondere ein Auto mit einem geeigneten Fahrerassistenzsystem sein.

### Offenbarung der Erfindung

Das erfindungsgemäße Verfahren zum Modellieren eines Umfelds eines Fahrzeugs, umfasst die folgenden Schritte: Zunächst werden Umfelddaten für eine Vielzahl von Messpositionen gewonnen. Dies geschieht durch Erfassen des Umfelds mittels zumindest eines Sensors. Der Sensor ist bevorzugt ein aktiver oder passiver optischer Sensor. Alternativ ist der Sensor bevorzugt ein Ultraschallsensor oder ein Radarsensor. Erfindungsgemäß werden sämtliche Messpositionen, an denen der Sensor das Umfeld erfasst, gespeichert. Außerdem wird eine Vielzahl von Kacheln bereitgestellt, die zum Speichern der Umfelddaten dienen. Die Kacheln sind vorteilhafterweise von GridTiles.

Die Umfelddaten werden anschließend gespeichert. Dies geschieht bevorzugt in den zuvor bereitgestellten Kacheln. So ist erfindungsgemäß vorgesehen, dass die Umfelddaten in zumindest einer ersten Kachel und in zumindest einer zweiten Kachel eines ersten Umfeldmodells gespeichert werden. Die erste Kachel und die zweite Kachel repräsentieren einen Teilbereich des Umfelds, das modelliert werden soll. Zusätzlich werden zumindest ein eindeutiges Merkmal aus den Umfelddaten der ersten Kachel und eine zugehörige erste Messposition gespeichert. Die erste Messposition ist diejenige Position, an der das Merkmal erfasst wurde. Schließlich wird eine gefahrene Trajektorie des Fahrzeugs gespeichert. Dies kann bevorzugt bereits durch das Speichern der Messpunkte geschehen, da die Messpunkte die Trajektorie des Fahrzeugs diskretisiert abbilden.

Anschließend wird das Merkmal, das zuvor gespeichert wurde, aus einer zweiten Messposition innerhalb der zweiten Kachel erfasst. Erfindungsgemäß ist dabei vorgesehen, dass die Umfelddaten der ersten Kachel und die der zweiten Kachel nicht identisch sind. Daher wird kein Zusammenführen der ersten Kachel und der zweiten Kachel gemäß der GridTiles-Methode durchgeführt. Das Erfassen des Merkmals innerhalb der zweiten Zelle zeigt jedoch, dass die erste Zelle und die zweiten Zelle denselben Teilbereich des Umfeld repräsentieren müssen. Da jedoch die Umfelddaten der ersten Zelle und der zweiten Zelle nicht identisch sind, liegen Messfehler vor. Dies bedeutet auch, dass die gefahrene Trajektorie, die das Fahrzeug relativ zu dem ersten Umfeldmodell zurückgelegt hat, fehlerbehaftet ist.

Zum Korrigieren der Messfehler werden in einem nächsten Schritt die erste Messposition und die zweite Messposition herangezogen. Bevorzugt anhand des Unterschieds zwischen der ersten Messposition und der zweiten Messposition kann eine korrigierte Trajektorie ermittelt werden, indem bevorzugt der Unterschied der ersten Messposition und der zweiten Messposition auf die gefahrene Trajektorie zurückgerechnet werden. Anhand der erhaltenen zweiten Trajektorie kann schließlich ein zweites Umfeldmodell erstellt werden, in das korrigierte Umfelddaten eingefügt werden. Die korrigierten Umfelddaten werden dazu aus der korrigierten Trajektorie und dem ersten Umfeldmodell berechnet.

Auf die beschriebene Weise entsteht ein zweites Umfeldmodell, das korrekte Werte aufweist, selbst wenn die ursprünglich gemessenen Daten aufgrund von Messfehlern fehlerbehaftet waren. Bevorzugt wird ein zusätzliches Speichern aller Messdaten wie im Stand der Technik explizit nicht durchgeführt.

Die Unteransprüche zeigen bevorzugte Weiterbildungen der Erfindung.

In einer bevorzugten Ausführungsform der Erfindung umfasst das Erstellen des zweiten Umgebungsmodells die folgenden Schritte: Das erste Umfeldmodell wird virtuell entlang der gefahrenen Trajektorie abgefahren, wobei ein virtuelles Messen des repräsentierten Teilsbereichs des Umfelds an den gespeicherten Messpositionen erfolgt. Auf diese Weise werden virtuelle Messdaten gewonnen.

Die virtuellen Messdaten approximieren ursprünglich durch den Sensor gewonnene Messdaten, da letztere als Umfelddaten in den Kacheln des ersten Umfeldmodells gespeichert wurden. Weiterhin erfolgt ein virtuelles Abfahren des zweiten Umfeldmodells entlang der korrigierten Trajektorie. Dabei werden die virtuellen Messdaten in das zweite Umfeldmodell eingefügt. Da das zweite Umfeldmodell mit der korrigierten Trajektorie abgefahren wird, sind keine Messfehler mehr vorhanden. Die virtuellen Messdaten werden vielmehr global korrekt in das zweite Umfeldmodell eingefügt. Das virtuelle Abfahren des ersten Umfeldmodells und das virtuelle Abfahren des zweiten Umfeldmodells geschehen bevorzugt gleichzeitig. Dadurch wird ein Zwischenspeichern der virtuellen Messdaten vermieden, da die virtuellen Messdaten direkt in das zweite Umfeldmodell eingefügt werden.

Vorteilhafterweise ist das virtuelle Messen durch ein Extrahieren von Messdaten aus dem ersten Umfeldmodell innerhalb eines vordefinierten Bereichs um die gespeicherten Messpositionen realisiert. Dies ermöglicht ein schnelles und einfaches Gewinnen von virtuellen Messdaten.

Ebenso vorteilhaft wird das virtuelle Messen durch einen virtuellen Sensor realisiert. Der virtuelle Sensor weist insbesondere einen vordefinierten virtuellen Erfassungsbereich auf, so dass eine reale Messung mit möglichst geringen Abweichungen approximiert wird.

Bevorzugt weisen die gefahrene Trajektorie und die korrigierte Trajektorie dieselbe Länge auf. Dies ermöglicht eine direkte Übertragung von Messdaten aus dem ersten Umfeldmodell in das zweite Umfeldmodell, insbesondere durch eine 1:1 Logik. Ein aufwändiges Transformieren einer Position auf der gefahrenen Trajektorie in eine Position auf der korrigierten Trajektorie ist somit nicht nötig.

Das Merkmal ist vorteilhafterweise ein Positionsmerkmal, insbesondere eine erfasste Kante. Alternativ oder zusätzlich ist das Merkmal vorteilhafterweise ein Bildmerkmal, das mittels skaleninvarianter Merkmalstransformation (auch SIFT, Scale-Invariant Feature Transform) aus den Umfelddaten extrahierbar ist.

Weiterhin ist vorteilhaft vorgesehen, dass das erste Umfeldmodell und das zweite Umfeldmodell in einer gemeinsamen Speichervorrichtung gespeichert werden.

Insbesondere die Verwendung von GridTiles sieht vor, dass ein GridManager vorhanden ist, der die Aufgabe des Bereitstellens und Entfernens von neuen Kacheln übernimmt. Somit kann dieser GridManager bevorzugt zwei Sammlungen von Kacheln verwalten, die das erste Umfeldmodell und das zweite Umfeldmodell bilden. Dies führt zu einem Einsparen von Speicherressourcen.

In einer bevorzugten Ausführungsform des erfindungsgemäßen Verfahrens werden Kacheln des ersten Umfeldmodells, deren Umfelddaten in das zweite Umfeldmodell eingefügt wurden, aus dem ersten Umfeldmodell gelöscht. Dies hat den Vorteil, dass nicht mehr benötigte Daten keinen zusätzlichen Speicherplatz blockieren. Der Aufwand zum Speichern des ersten Umfeldmodells und des zweiten Umfeldmodells wird daher deutlich verringert.

Besonders bevorzugt ist vorgesehen, dass sich das erste Umfeldmodell und das zweite Umfeldmodell in einem vordefinierten Teilbereich des Umfelds des Fahrzeugs überlappen. Auf diese Weise kann ein nötiger Speicherbedarf zum Speichern des ersten Umfeldmodells und des zweiten Umfeldmodells auf ein Minimum reduziert werden.

Zusätzlich betrifft die Erfindung ein Steuergerät. Das Steuergerät ist mit zumindest einem Sensor verbunden, der eingerichtet ist, sein Umfeld abzutasten. Weiterhin ist eine Speichervorrichtung mit dem Steuergerät verbunden. Das Steuergerät ist erfindungsgemäß eingerichtet, das zuvor beschriebene Verfahren auszuführen. Insbesondere ist das Steuergerät in einem Fahrzeug angeordnet, so dass das Steuergerät ein Umfeldmodell des Fahrzeugs erstellen kann, um dem Fahrer das Umfeld seines Fahrzeugs anzuzeugen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Ansicht eines Umfeldmodells gemäß dem Stand der Technik,
- Figur 2: eine schematische Ansicht eines ersten Umfeldmodells gemäß einem Ausführungsbeispiel der Erfindung,
- Figur 3: eine weitere schematische Ansicht des ersten Umfeldmodells gemäß dem Ausführungsbeispiel der Erfindung,
- Figur 4: eine schematische Ansicht eines zweiten Umfeldmodells gemäß dem Ausführungsbeispiel der Erfindung, und
- Figur 5: eine schematische Ansicht eines Steuergeräts gemäß einem Ausführungsbeispiel der Erfindung.

### Ausführungsbeispiele der Erfindung

In einem Ausführungsbeispiel der Erfindung werden vorteilhafterweise GridTiles benutzt, deren folgende Eigenschaften genutzt werden können: Fährt ein Roboter, insbesondere ein Fahrzeug, der seine Umgebung 1 mittels GridTiles abbildet, in einer Schleife und erkennt nicht genau die gleiche Situation wie an derselben Stelle des letzten Schleifendurchlaufs, so werden neue Kacheln 3 ausgelegt. Dies geschieht vollautomatisch, wie in Figur 2 skizziert ist. Figur 2 zeigt schematisch ein erstes Umfeldmodell 10, das aus mehreren Kacheln 3 gebildet ist. Die Nachbarschaftsbeziehungen zwischen Kacheln 3 sind nur lokal bekannt, so dass eine dritte Kachel 6 kurz vor dem Schleifenende, die nichts von der Startkachel (erste Kachel 4) weiß, eine neue Nachbarkachel (zweite Kachel 5) anlegt. Ein Zusammenführen (Mergen) der ersten Kachel 4 und der zweiten Kachel 5 geschieht laut dem GridTile Algorithmus nur wenn deren Inhalt ähnlich genug ist, also beispielsweise dieselben Umgebungsobjekte erkannt werden.

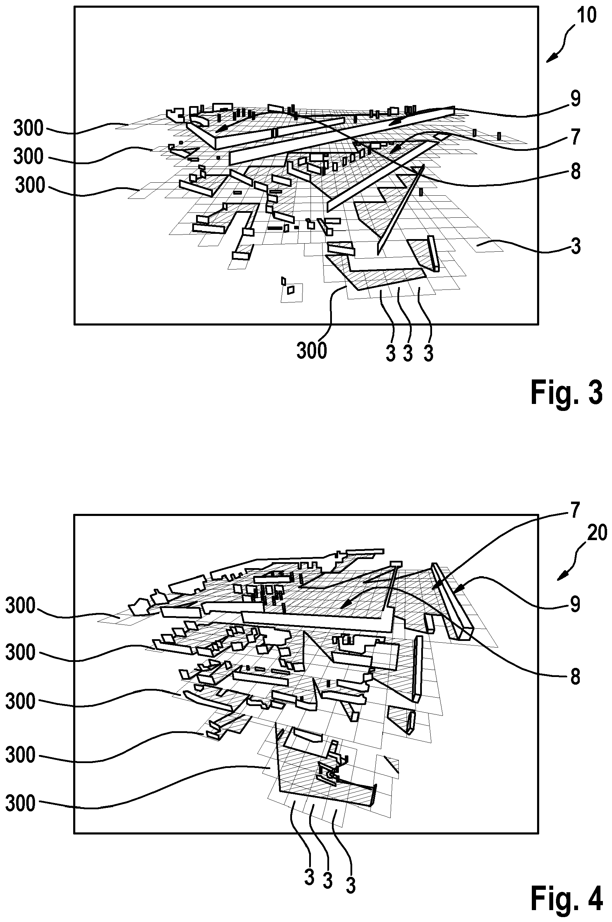

Ein vergleichbarer Fall liegt vor, wenn ein Roboter eine Schleife fährt und eine Positionierungseinheit des Roboters fehlerbehaftet ist. Dann kann der Merging-Schritt nicht erfolgreich durchgeführt werden und es werden neben der zweiten Kachel 5 weitere neue Kacheln 3 angelegt und so eine neue virtuelle Ebene erstellt. Dies ist beispielhaft in Figur 3 ausgeführt.

Figur 3 zeigt eine graphische Repräsentation des ersten Umfeldmodells 10, wobei hier wiederum Hindernisse 9 und Freiflächen 7 modelliert sind. Für die Erstellung des ersten Umfeldmodells 10 ist ein Roboter, insbesondere ein Fahrzeug, mehrere Schleifen gefahren. Beispielsweise durch einen Odometriedrift kann der Merging Schritt nicht durchgeführt werden, da die Inhalte der ersten Zelle 4 und der zweiten Zelle 5 (vgl. Fig. 2) nicht identisch sind. Daher wird mit jeder Schleife eine neue Ebene 300 erstellt.

In Figur 3 ist deutlich zu sehen, dass jede Ebene 300 um mehrere Grad gegenüber der darunterliegenden Ebene 300 verdreht ist. Um diese Daten zu korrigieren, werden alle Positionspunkte (Messpunkte) gespeichert. Zusätzlich ist es möglich besondere Merkmale 8 in einer Liste mitzuführen, jedoch können diese Merkmale 8 auch aus Griddaten, beispielsweise Liniensegmenten, gewonnen werden. Insbesondere können die Merkmale 8 Positionsfeatures wie Kanten oder Bildbasierte Merkmale wie SIFT-Features (Scale-invariant feature transform, skaleninvariante Merkmalstransformation) sein.

Mit den gespeicherten Positionspunkten und den Merkmalen 8 (Features) wird ein zuvor genannter Loop-Closing Ansatz durchgeführt um die tatsächlich gefahrene Trajektorie zu berechnen. Ein zusätzliches Speichern aller Messdaten wie im Stand der Technik wird explizit nicht durchgeführt. Somit wird festgestellt, wenn ein Merkmal 8 erneut erkannt wird. Beispielsweise kann das Merkmal 8 in der ersten Kachel 4 vorhanden sein, so dass das Merkmal 8 in der zweiten Kachel 5 erneut erkannt wird. Auf diese Weise kann festgestellt werden, dass sich der Roboter an einer real altbekannten Position befindet. Falls der Sensor 1 das Merkmal 8 in der zweiten Kachel 5 an einer anderen Position, als in der ersten Kachel 4 detektiert, so wird anhand dieses Fehlers eine korrigierte Trajektorie berechnet. Dies erfolgt analog zu dem bekannten Loop-Closing Ansatz.

Nun wird ein zweites Umfeldmodell 20 mithilfe der korrigierten Trajektorie erstellt, was in Figur 4 gezeigt ist. Das zweite Umfeldmodell 20 modelliert analog zu dem ersten Umfeldmodell 10 Hindernisse 9 und Freiflächen 7. Zum Erstellen des zweiten Umfeldmodells 20 wird das aufgezeichnete erste Umfeldmodell mit der originalen Trajektorie virtuell abgefahren und für jeden gespeicherten Positionspunkt mit einem virtuellen Sensor die lokale Umgebung des virtuellen Roboters erfasst. Im einfachsten Fall werden alle Messdaten innerhalb eines gewissen Radius extrahiert, in weiteren Schritten kann der FieldOfView, d.h. der Erfassungsbereich des virtuellen Sensors beschnitten werden. Weiterhin können verdeckte Pixel im Grid (erstes Umfeldmodell 10) durch den virtuellen Sensor ausgeblendet werden. Dadurch wird virtuell eine Messung des Sensors 2, die an dieser Stelle in der Originalszene stattgefunden hat, approximiert.

In dem zweiten Umfeldmodell 20 wiederum fährt ein virtueller Roboter entlang der korrigierten Trajektorie. Dabei werden an jedem korrespondierenden Trajektorien-Punkt die entsprechend extrahierten virtuellen Sensormessungen integriert. Hierbei ist es vorteilhaft, dass die beiden Trajektorien, d.h. die korrigierte Trajektorie und die originale Trajektorie, dieselbe Länge haben, sodass die Korrespondenz über eine "1:1 Logik" durchgeführt werden kann. Dadurch ist gewährleistet, dass alle, lokal korrekten, Informationen aus dem ersten Umfeldmodell 10 in das, nun global ebenfalls korrekte, zweite Umfeldmodell 20 überführt werden.

Mit einem klassischen Umfeldmodell gemäß dem Stand der Technik wäre dies nicht möglich, da wie in Figur 1 gezeigt viel leerer Raum mit alten und/oder anderen Messdaten überlagert ist. Daher müssen für eine klassische Modellierung zum Lösen des Loop-Closing Problems alle Messdaten gespeichert werden. Durch das erfindungsgemäße Verfahren kann dieser Speicherschritt übergangen werden.

Der in den Figuren 1, 3 und 4 gezeigte Datensatz belegt ca. zwei Megabyte an Speicherplatz bei einer Auflösung von 10 Zentimeter. Die dazugehörigen Messdaten belegen etwa sechzig Megabyte. Diese Daten müssten in ihrer Gesamtheit gespeichert werden. Nach dem erfindungsgemäßen Verfahren werden zeitgleich die zwei Modelle aufgebaut d.h. es werden maximal vier Megabyte benötigt. Dadurch ergibt sich ein Speichergewinn von insgesamt ca. 93%. Bei größeren Schleifen und längeren Strecken kann das Speicherbedürfnis für ein klassisches Loop-Closing beliebig anwachsen. Mithilfe der GridTiles kann jede Schleife geschlossen werden, für die genügend Speicher vorhanden ist, sie zweimal als Umfeldmodell, d.h. als erstes Umfeldmodell 10 und als zweites Umfeldmodell 20, abzubilden.

### Weitere Aspekte dieses Ausführungsbeispiels:

Mit derselben Methodik können ebenfalls Modelle von Parkhäuser oder vergleichbaren Mehrebenenkonstruktionen korrekt modelliert werden. Hierbei liegt zwar kein klassisches Loop-Closing Problem vor, jedoch ist bei geeigneter Wahl der Merkmale (Features, z.B. Bild-Features im oberen Viertel einer Kamera, die die Decken von Parkhausebenen filmt oder Wandkanten) das Mehrebenenproblem auf ein klassisches Loop-Closing zurückgeführt werden.

Um eine weitere Speicheroptimierung zu erhalten ist es möglich auf einen weiteren Vorteil der GridTiles zurückzugreifen. Das Datenmanagement übernimmt hierbei ein GridManager. Wenn für das zweite Umfeldmodell 20 von diesem GridManager eine Kachel 3 ohne jegliche Nachbarschaftsbeziehung angefordert wird, liegen zwei getrennte Modelle, die durch denselben Speicherbereich modelliert werden, vor. Um einen Speichergewinn zu erreichen, können Kacheln 3 aus dem ersten Umfeldmodell 10, deren Information bereits vollständig extrahiert wurde, aus dem Modell ausgehängt und resettet werden. Dadurch ist es möglich, dass sich das erste Umfeldmodell 10 und das zweite Umfeldmodell 20 nur noch an den Kacheln 3 um die jeweilige momentane Position des Fahrzeuges herum überlappen. In dem gezeigten Ausführungsbeispiel in Figur 4 sind dies ca. 150 Kacheln. Dadurch lässt sich der notwendige zusätzliche Speicherbedarf von zwei Megabyte für ein zweites disjunktes Umfeldmodell auf 150 Kacheln mit jeweils einem Kilobyte reduzieren. Das bedeutet von den ursprünglichen, nach klassischer Loop-Closing Methodik erforderlichen sechzig Megabyte eine Reduktion um 99.75%.

Zusammenfassend wurde ein Verfahren vorgestellt, dass durch eine Modellierung eines Umfeldes eines Roboters, insbesondere eines Fahrzeuges mit geeignetem Fahrerassistenzsystem, mithilfe von GridTiles einfach und speichergünstig das Loop-Closing Problem bearbeitet werden kann. Dadurch wird sowohl große Mengen an unnötigen Speicherzellen gespart, als auch ein kontinuierlich anwachsender Speicher vermieden.

Durch den Drift in der Lokalisierungseinheit bilden die GridTiles vollautomatisch ein 3D Modell der Umgebung aus. Dadurch wird vermieden, dass neue Messungen alte Überschreiben und ungültig machen, wie dies im Stand der Technik der Fall war (vgl. Figur 1). Durch das virtuelle Abfahren des Modells und das Integrieren von virtuellen Messungen in ein neues Weltmodell kann das Modell entzerrt und damit korrigiert werden.

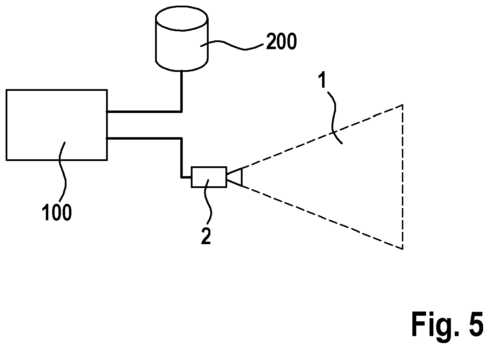

Figur 5 zeigt ein Steuergerät 100 gemäß einem Ausführungsbeispiel der Erfindung. Das Steuergerät 100 ist mit einer Speichervorrichtung 200 und mit einem Sensor 2 verbunden, so dass das Steuergerät das zuvor beschriebene Verfahren ausführen kann.

## Patentansprüche

1. Verfahren zum Modellieren eines Umfelds (1) eines Fahrzeugs, umfassend die Schritte
- Gewinnen von Umfelddaten für eine Vielzahl von Messpositionen durch Erfassen des Umfelds (1) durch zumindest einen Sensor (2), und
- Speichern der Messpositionen,
**gekennzeichnet durch** die weiteren Schritte
- Bereitstellen einer Vielzahl von Kacheln (3), die GridTiles sind, zum Speichern der Umfelddaten,
- Speichern der Umfelddaten in zumindest einer ersten Kachel (4) und in zumindest einer zweiten Kachel (5) eines ersten Umfeldmodells (10), wobei die erste Kachel (4) und die zweite Kachel (5) einen Teilbereich des Umfelds (1) repräsentiert,
- Speichern von zumindest einem eindeutigen Merkmal (8) aus den Umfelddaten der ersten Kachel (4) und einer zugehörigen ersten Messposition, an der das Merkmal (8) erfasst wurde,
- Speichern einer gefahrenen Trajektorie des Fahrzeugs,
- Erfassen des Merkmals (8) aus einer zweiten Messposition innerhalb der zweiten Kachel (5), wobei die Umfelddaten der ersten Kachel (4) und der zweiten Kachel (5) nicht identisch sind,
- Ermitteln einer korrigierten Messposition und einer korrigierten Trajektorie aus der ersten Messposition und der zweiten Messposition und der gefahrenen Trajektorie, und
- Erstellen eines zweiten Umfeldmodells (20) durch Einfügen von anhand der korrigierten Trajektorie korrigierten Umfelddaten des ersten Umfeldmodells (10).

2. Verfahren nach Anspruch 1, **dadurch gekennzeichnet, dass** das Erstellen des zweiten Umgebungsmodells die folgenden Schritte umfasst
- virtuelles Abfahren des ersten Umfeldmodells (10) entlang der gefahrenen Trajektorie und virtuelles Messen des repräsentierten Teilsbereichs des Umfelds (1) an den gespeicherten Messpositionen zum Gewinnen von virtuellen Messdaten,
- virtuelles Abfahren des zweiten Umfeldmodells (20) entlang der korrigierten Trajektorie und Einfügen der virtuellen Messdaten in das zweite Umfeldmodell (20).

3. Verfahren nach Anspruch 2 **dadurch gekennzeichnet, dass** das virtuelle Messen durch ein Extrahieren von Messdaten aus dem ersten Umfeldmodell (10) innerhalb eines vordefinierten Bereichs um die gespeicherten Messpositionen realisiert ist.

4. Verfahren nach Anspruch 2 oder 3, **dadurch gekennzeichnet, dass** das virtuelle Messen durch einen virtuellen Sensor realisiert ist, wobei der virtuelle Sensor einen vordefinierten virtuellen Erfassungsbereich aufweist.

5. Verfahren nach einem der vorhergehenden Ansprüche, **dadurch gekennzeichnet, dass** die gefahrene Trajektorie und die korrigierte Trajektorie dieselbe Länge aufweisen.

6. Verfahren nach einem der vorhergehenden Ansprüche, **dadurch gekennzeichnet, dass** das Merkmal (8) ein Positionsmerkmal, insbesondere eine erfasste Kante, ist und/oder ein Bildmerkmal ist, das mittels skaleninvarianter Merkmalstransformation aus den Umfelddaten extrahierbar ist.

7. Verfahren nach einem der vorhergehenden Ansprüche, **dadurch gekennzeichnet, dass** das erste Umfeldmodell (10) und das zweite Umfeldmodell (20) in einer gemeinsamen Speichervorrichtung (200) gespeichert werden.

8. Verfahren nach einem der vorhergehenden Ansprüche, **dadurch gekennzeichnet, dass** Kacheln (3) des ersten Umfeldmodells (10), deren Umfelddaten in das zweite Umfeldmodell (20) eingefügt wurden, aus dem ersten Umfeldmodell (10) gelöscht werden.

9. Verfahren nach Anspruch 8, wobei sich das erste Umfeldmodell (10) und das zweite Umfeldmodell (20) in einem vordefinierten Teilbereich des Umfelds (1) des Fahrzeugs überlappen.

10. Steuergerät (100), das mit zumindest einem Sensor (2) zum Abtasten eines Umfelds (1) und mit zumindest einer Speichervorrichtung (200) verbunden ist, **dadurch gekennzeichnet, dass** das Steuergerät (100) eingerichtet ist, das Verfahren gemäß einem der vorhergehenden Ansprüche auszuführen.

## Claims

1. Method for modelling the surroundings (1) of a vehicle, comprising the steps
- acquiring surroundings data for a multiplicity of measuring positions by sensing the surroundings (1) by means of at least one sensor (2), and
- storing the measuring positions,
**characterized by** the further steps
- making available a multiplicity of tiles (3), which are grid tiles, for storing the surroundings data,
- storing the surroundings data in at least a first tile (4) and in at least a second tile (5) of a first surroundings model (10), wherein the first tile (4) and the second tile (5) represent a part of the surroundings (1),
- storing at least one clear feature (8) from the surroundings data of the first tile (4) and an associated first measuring position of which the feature (8) was sensed,
- storing a travelled-along trajectory of the vehicle,
- sensing the feature (8) from a second measuring position within the second tile (5), wherein the surroundings data of the first tile (4) and of the second tile (5) are not identical,
- determining a corrected measuring position and a corrected trajectory from the first measuring position and the second measuring position and the travelled-along trajectory, and
- producing a second surroundings model (20) by inserting surroundings data, corrected on the basis of the corrected trajectory, of the first surroundings model (10).

2. Method according to Claim 1, **characterized in that** the production of the second surroundings model comprises the following steps:
- virtual travel of the first surroundings model (10) along the travelled-along trajectory and virtual measurement of the represented part of the surroundings (1) at the stored measuring positions in order to acquire virtual measuring data,
- virtual travel of the second surroundings model (20) along the corrected trajectory and insertion of the virtual measuring data into the second surroundings model (20).

3. Method according to Claim 2, **characterized in that** the virtual measurement is implemented by extracting measuring data from the first surroundings model (10) within a predefined region around the stored measuring positions.

4. Method according to Claim 2 or 3, **characterized in that** the virtual measurement is implemented by means of a virtual sensor, wherein the virtual sensor has a predefined virtual sensing range.

5. Method according to one of the preceding claims, **characterized in that** the travelled-along trajectory and the corrected trajectory have the same length.

6. Method according to one of the preceding claims, **characterized in that** the feature (8) is a position feature, in particular a sensed edge, and/or is an image feature which can be extracted by means of scale-invariant feature transformation from the surroundings data.

7. Method according to one of the preceding claims, **characterized in that** the first surroundings model (10) and the second surroundings model (20) are stored in a common storage device (200).

8. Method according to one of the preceding claims, **characterized in that** tiles (3) of the first surroundings model (10), the surroundings data of which have been inserted into the second surroundings model (20), are deleted from the first surroundings model (10).

9. Method according to Claim 8, wherein the first surroundings model (10) and the second surroundings model (20) overlap in a predefined part of the surroundings (1) of the vehicle.

10. Control device (100) which is connected to at least one sensor (2) for scanning the surroundings (1), and connected to at least one storage device (200), **characterized in that** the control device (100) is configured to carry out the method according to one of the preceding claims.

## Revendications

1. Procédé, permettant de modéliser un environnement (1) d'un véhicule, comprenant les étapes consistant à :
- acquérir des données relatives à l'environnement pour une pluralité de positions de mesure, par détection de l'environnement (1) par au moins un capteur (2), et
- mémoriser les positions de mesure,
**caractérisé par** les étapes supplémentaires consistant à
- mettre à disposition une pluralité de carreaux (3), qui sont des carrelages, pour mémoriser les données relatives à l'environnement,
- mémoriser les données relatives à l'environnement dans au moins un premier carreau (4) et dans au moins un deuxième carreau (5) d'un premier modèle d'environnement (10), le premier carreau (4) et le deuxième carreau (5) représentant une zone partielle de l'environnement (1),
- mémoriser au moins une caractéristique (8) univoque à partir des données relatives à l'environnement du premier carreau (4) et d'une première position de mesure associée, au niveau de laquelle la caractéristique (8) a été détectée,
- mémoriser une trajectoire parcourue par le véhicule,
- détecter la caractéristique (8) à partir d'une deuxième position de mesure à l'intérieur du deuxième carreau (5), les données relatives à l'environnement du premier carreau (4) et du deuxième carreau (5) n'étant pas identiques,
- déterminer une position de mesure corrigée et une trajectoire corrigée à partir de la première position de mesure et de la deuxième position de mesure et de la trajectoire parcourue, et
- établir un deuxième modèle d'environnement (20) par insertion de données relatives à l'environnement du premier modèle d'environnement (10) corrigées à l'aide de la trajectoire corrigée.

2. Procédé selon la revendication 1, **caractérisé en ce que** l'établissement du deuxième modèle d'environnement comprend les étapes suivantes, consistant à
- traverser virtuellement le premier modèle d'environnement (10) le long de la trajectoire parcourue et mesurer virtuellement la zone partielle représentée de l'environnement (1) au niveau des positions de mesure mémorisées, pour acquérir des données de mesure virtuelles,
- traverser virtuellement le deuxième modèle d'environnement (20) le long de la trajectoire corrigée et insérer les données de mesure virtuelles dans le deuxième modèle d'environnement (20).

3. Procédé selon la revendication 2, **caractérisé en ce que** la mesure virtuelle est réalisée par une extraction de données de mesure à partir du premier modèle d'environnement (10) à l'intérieur d'une zone prédéfinie autour des positions de mesure mémorisées.

4. Procédé selon la revendication 2 ou 3, **caractérisé en ce que** la mesure virtuelle est réalisée par un capteur virtuel, le capteur virtuel présentant une zone de détection virtuelle prédéfinie.

5. Procédé selon l'une quelconque des revendications précédentes, **caractérisé en ce que** la trajectoire parcourue et la trajectoire corrigée sont de même longueur.

6. Procédé selon l'une quelconque des revendications précédentes, **caractérisé en ce que** la caractéristique (8) est une caractéristique de position, notamment une arête détectée, et/ou une caractéristique d'image, qui est extractible à partir des données relatives à l'environnement par transformation de caractéristiques à échelle invariante.

7. Procédé selon l'une quelconque des revendications précédentes, **caractérisé en ce que** le premier modèle d'environnement (10) et le deuxième modèle d'environnement (20) sont mémorisés dans un dispositif de mémoire (200) commun.

8. Procédé selon l'une quelconque des revendications précédentes, **caractérisé en ce que** des carreaux (3) du premier modèle d'environnement (10), dont les données relatives à l'environnement ont été insérées dans le deuxième modèle d'environnement (20), sont supprimés du premier modèle d'environnement (10).

9. Procédé selon la revendication 8, le premier modèle d'environnement (10) et le deuxième modèle d'environnement (20) se chevauchant dans une zone partielle prédéfinie de l'environnement (1) du véhicule.

10. Instrument de commande (100), qui est connecté avec au moins un capteur (2) destiné à balayer un environnement (1) et avec au moins un dispositif de mémoire (200), **caractérisé en ce que** l'instrument de commande (100) est aménagé pour réaliser le procédé selon l'une quelconque des revendications précédentes.
